# EUROPEAN PATENT APPLICATION

(11) **EP 4 822 813 A1**
(43) Date of publication of application: **14.10.2026**
(21) Application number: 24914836.2
(22) Date of filing: 21.08.2024
(51) Int. Cl.: H01M 10/44

(54) **CELL FORMATION METHOD**

(30) Priority: 02.01.2024 CN 202410002369
(71) Applicant: Contemporary Amperex Technology Co., Limited, Ningde, Fujian 352100 (CN)
(72) Inventor: ZHONG, Bin, Ningde, Fujian 352100 (CN); SHI, Qiming, Ningde, Fujian 352100 (CN); HUANG, Caixia, Ningde, Fujian 352100 (CN); GE, Shaobing, Ningde, Fujian 352100 (CN); MA, Qisheng, Ningde, Fujian 352100 (CN); HUANG, Jiapeng, Ningde, Fujian 352100 (CN); HE, Zehong, Ningde, Fujian 352100 (CN)
(74) Representative: Ran, Handong
(86) International application number: PCT/CN2024/113657
(87) International publication number: WO 2025/145614

(57) **Abstract**

Provided in the present application is a cell formation method, comprising the following steps: dividing cells into a control sample cell and a cell to be tested; subjecting the control sample cell to electrolyte filling and standing, then performing formation with an injection port being in an open state, and on the basis of the amount of gas generated during the formation process of the control sample cell and the charging SOC of the control sample cell, constructing a gas production curve of formation; dividing the obtained curve into three consecutive segments, wherein the cumulative amount of gas generated during the formation process corresponding to a first segment of the curve accounts for 1% of the total gas amount of the formation process, the cumulative amount of gas generated during the formation process corresponding to a third segment of said curve accounts for 1% of the total gas amount of the formation process, the charging SOC of the cell corresponding to a connection point between the first segment of said curve and a second segment of said curve is taken as a gas production initial SOC, and the charging SOC of the cell corresponding to a connection point between the second segment of said curve and the third segment of said curve is taken as a gas production cutoff SOC; and on the basis of the gas production charging SOC and the gas production cutoff SOC, performing formation on the cell to be tested that has been subjected to electrolyte filling and standing.

## Description

### CROSS-REFERENCE TO RELATED APPLICATIONS

This application claims priority to Chinese patent application 202410002369.X, filed on January 02, 2024 and entitled "BATTERY CELL FORMATION METHOD", which is incorporated herein by reference in its entirety.

### TECHNICAL FIELD

This application relates to the field of battery technology, and specifically to a battery cell formation method.

### BACKGROUND

Battery cells are widely used in electronic devices, such as mobile phones, notebook computers, storage batteries, electric vehicles, electric aircraft, electric ships, electric toy cars, electric toy ships, electric toy aircraft, and electric tools.

In the production process of battery cells, formation of battery cells is required. Formation is the process of first charging batteries, and its function is to activate internal positive and negative electrode substances. The formation process plays a critical role in the performance of battery cells. How to improve formation efficiency is an urgent problem to be solved.

### SUMMARY

Embodiments of this application provide a battery cell formation method, including the following steps:
dividing battery cells into reference sample battery cells and battery cells under test;
taking the reference sample battery cells after liquid injection and standing, performing formation with liquid injection ports in an open state, and constructing a formation gas production curve based on a gas production amount during a formation process of the reference sample battery cells and a charging SOC of the reference sample battery cells;
dividing the obtained formation gas production curve into three consecutive segments, where a cumulative gas production amount of the formation process corresponding to a first segment curve accounts for 1% of a total gas production amount of the formation process, and a cumulative gas production amount of the formation process corresponding to a third segment curve accounts for 1% of the total gas production amount of the formation process; and taking a charging SOC of the battery cells corresponding to a connection point between the first segment curve and the second segment curve as an initial gas production SOC, and taking a charging SOC of the battery cells corresponding to a connection point between the second segment curve and the third segment curve as a cutoff gas production SOC; and
taking the battery cells under test after liquid injection and standing, and performing formation, where a formation process includes three stages:
   in a first stage, liquid injection ports of the battery cells are in a closed state, and the battery cells are charged at a constant current I₁ until a charging SOC of the battery cells does not exceed an initial gas production SOC;
   in a second stage, the liquid injection ports of the battery cells are in an open state, and the battery cells are charged until the charging SOC of the battery cells is not lower than a cutoff gas production SOC; and
   in a third stage, the liquid injection ports of the battery cells are in the closed state, and the battery cells are charged until the battery cells reach a charging cutoff voltage.

In embodiments of this application, by performing formation on the reference sample battery cells using the same formation process as the battery cells under test, a formation gas production curve of the battery cells is obtained. According to the formation gas production curve, a charging SOC corresponding to a start time of gas production and a stop time of gas production during the formation process of the battery cells under test can be intuitively obtained. The two charging SOC values are respectively used as judgment basis for opening the liquid injection ports and closing the liquid injection ports during the formation process. When the charging SOC reaches the initial gas production SOC, the liquid injection port is opened for open formation. When the charging SOC reaches the cutoff gas production SOC, the liquid injection port is closed for closed formation. Thus, opening/closing operations of the liquid injection ports are completed in a timely and accurate manner without relying on external gas production amount detection apparatus, simplifying the formation process.

In some embodiments of this application, the second stage includes: the liquid injection ports of the battery cells are in the open state, and the battery cells are charged at a constant current I₂ to a first state, and charged at a constant voltage U₁ until the charging SOC of the battery cells is not lower than the cutoff gas production SOC.

In some embodiments of this application, the third stage includes: the liquid injection ports of the battery cells are in the closed state, and the battery cells are charged at the constant voltage U₁ to the charging cutoff voltage.

In some embodiments of this application, the current I₂ is 0.3C-0.5C.

In some embodiments of this application, the voltage U₁ is 2.5V-3.7V.

In some embodiments of this application, the first state is that the charging SOC of the battery cells reaches 30%SOC-45%SOC.

In some embodiments of this application, the second stage includes: the liquid injection ports of the battery cells are in the open state, and the battery cells are charged at a constant current I₃ until the charging SOC of the battery cells is not lower than the cutoff gas production SOC.

In some embodiments of this application, the third stage includes: the liquid injection ports of the battery cells are in the closed state, and the battery cells are charged at a constant current I3 to a second state, and then charged at a constant voltage U₂ to the charging cutoff voltage.

In some embodiments of this application, the current I₃ is 0.3C-0.5C.

In some embodiments of this application, the voltage U₂ is 2.5V-3.7V.

In some embodiments of this application, the current I₁ is 0.1C-0.2C.

In some embodiments of this application, the charging cutoff voltage is 3.7V-4.5V.

In some embodiments of this application, the battery cells are charged at the constant current I₁ until the charging SOC of the battery cells does not exceed the initial gas production SOC, and are left standing for 10s-30s.

In some embodiments of this application, formation temperature of the formation process is 40°C-55°C.

In some embodiments of this application, formation pressure of the formation process is -65KPa--90KPa.

### DESCRIPTION OF DRAWINGS

In order to more clearly illustrate the technical solutions of embodiments of this application, the drawings required in embodiments of this application are briefly introduced below. For those of ordinary skill in the art, other drawings can also be obtained based on these drawings without creative effort.
FIG. 1 is a schematic flow diagram of a battery cell formation method according to an embodiment of this application.
FIG. 2 is a schematic structural diagram of a gas production amount detection apparatus according to an embodiment of this application.
FIG. 3 is a formation gas production curve diagram according to an embodiment of this application.
FIG. 4 is a picture of a fresh electrode interface obtained by disassembling a battery cell after formation according to Example 1 of this application.
FIG. 5 is a picture of a fresh electrode interface obtained by disassembling a battery cell after formation according to Comparative Example 3 of this application.

Description of reference signs: 1. reference sample battery cell; 2. water storage barrel; 3. measuring cylinder; 4. exhaust pipe; and 5. drain pipe.

### DESCRIPTION OF EMBODIMENTS

Hereinafter, embodiments of a sodium-ion battery positive electrode material and preparation method thereof, a positive electrode sheet, a secondary battery, and an electronic device of this application are specifically disclosed with appropriate reference to the accompanying drawings. However, there may be cases where unnecessary detailed descriptions are omitted. For example, detailed descriptions of well-known matters and repeated descriptions of substantially identical structures may be omitted. This is to avoid the following description from becoming unnecessarily lengthy and to facilitate understanding by those skilled in the art. In addition, the accompanying drawings and the following description are provided for those skilled in the art to fully understand this application, and are not intended to limit the subject matter described in the claims.

The "range" disclosed in this application is defined in the form of a lower limit and an upper limit. A given range is defined by selecting one lower limit and one upper limit, and the selected lower limit and upper limit define the boundaries of the particular range. The range defined in this manner may or may not include endpoints, and may be combined arbitrarily, that is, any lower limit may be combined with any upper limit to form a range. For example, if ranges of 60-120 and 80-110 are listed for a particular parameter, ranges of 60-110 and 80-120 are also contemplated. In addition, if the listed minimum range values are 1 and 2, and if the listed maximum range values are 3, 4, and 5, the following ranges are all contemplated: 1-3, 1-4, 1-5, 2-3, 2-4, and 2-5. In this application, unless otherwise stated, the numerical range "a-b" represents an abbreviated representation of any real number combination between a and b, characterized in that both a and b are real numbers. For example, the numerical range "0-5" means that all real numbers between "0-5" have been listed herein, and "0-5" is only an abbreviated representation of these numerical combinations. In addition, when a parameter is expressed as an integer greater than or equal to 2, it is equivalent to disclosing that the parameter is, for example, integers 2, 3, 4, 5, 6, 7, 8, 9, 10, 11, or 12.

Unless otherwise stated, all embodiments and optional embodiments of this application may be combined with each other to form new technical solutions, and such technical solutions shall be considered to be included in the disclosure content of this application.

Unless otherwise stated, all technical features and optional technical features of this application may be combined with each other to form new technical solutions, and such technical solutions shall be considered to be included in the disclosure content of this application.

Unless otherwise stated, all steps of this application may be performed sequentially or randomly, preferably sequentially. For example, the method includes steps (a) and (b), indicating that the method may include steps (a) and (b) performed sequentially, or may include steps (b) and (a) performed sequentially. For example, the method may further include step (c), indicating that step (c) may be added to the method in any order. For example, the method may include steps (a), (b), and (c), or may include steps (a), (c), and (b), or may include steps (c), (a), and (b).

Unless otherwise stated, "include" and "comprise" mentioned in this application indicate an open-ended manner, and may also be closed-ended. For example, the "include" and "comprise" may indicate that other components not listed may also be included or comprised, or may only include or comprise the listed components.

Unless otherwise stated, the term "or" in this application is inclusive. For example, the phrase "A or B" means "A, B, or both A and B". More specifically, any of the following conditions satisfies the condition "A or B": A is true (or exists) and B is false (or does not exist); A is false (or does not exist) and B is true (or exists); or both A and B are true (or exist).

Unless otherwise stated, in this application, the terms "connecting" and "connection" shall be understood in a broad sense. For example, they may be a fixed connection, a detachable connection, or an integral connection; they may be a direct connection or an indirect connection through an intermediate medium; and they may be an internal communication between two elements. For those of ordinary skill in the art, the specific meanings of the above terms in this application can be understood according to specific circumstances.

Unless otherwise stated, in this application, the term "attach" refers to connection by means of adhesion or coating.

Unless otherwise stated, in this application, the terms "first", "second", "third", "fourth", and the like are used to distinguish different objects, rather than to describe a specific order or primary-secondary relationship.

Unless otherwise stated, in this application, the term "active ions" refers to ions that can be reversibly intercalated and deintercalated between the positive and negative electrodes of a battery cell, including but not limited to lithium ions, and sodium ions.

"Multiple" appearing in this application refers to two or more (including two).

In embodiments of this application, battery cells may include lithium-ion secondary battery cells, lithium-ion primary battery cells, lithium-sulfur battery cells, sodium-lithium-ion battery cells, and the like, which are not limited in embodiments of this application. The battery cells may be cylindrical, flat, rectangular, or other shapes, which are also not limited in embodiments of this application. Battery cells are generally divided into three types according to packaging methods: cylindrical battery cells, prismatic battery cells, and pouch battery cells, which are also not limited in embodiments of this application.

The battery mentioned in embodiments of this application refers to a single physical module including one or more battery cells to provide higher voltage and capacity. For example, the battery mentioned in this application may include a battery module, a battery pack, or the like. A battery generally includes a box body for accommodating one or more battery cells. The box body can prevent liquid or other foreign matter from affecting charging or discharging of battery cells.

A battery cell includes a housing, an electrode assembly, and an electrolyte. The electrode assembly includes a positive electrode sheet, a negative electrode sheet, and a separator. Battery cells mainly rely on metal ions moving between the positive electrode sheet and the negative electrode sheet through the electrolyte to operate.

Formation is a process of activating cells by using a certain charge-discharge method on battery cells after liquid injection to form an SEI film. The quality of the SEI film directly affects electrical performance such as cycle life, stability, and self-discharge of cells. During the formation process of the battery cells, active materials inside the cells are activated, positive electrode materials begin to release lithium ions, and lithium ions begin to move in the system. After solvation on the positive electrode surface, they reach the negative electrode surface through the separator. After solvated lithium ions directly contact the negative electrode and intercalate into the negative electrode material on the surface layer of the negative electrode, and the electrolyte undergoes reduction decomposition on the surface of the negative electrode material. While a solid electrolyte interface film (SEI film) is formed, by-product gases are generated. These gases need to be discharged in time through the liquid injection holes of the cells to ensure that lithium ion channels are not blocked by bubbles, reducing the impact of battery interface abnormalities on battery performance.

In addition, during the formation process, cells need to be kept dry, because excessive moisture inside cells reacts with the electrolytic salt LiPF₆ in the electrolyte to produce by-products such as POF₃, LiF, and HF. POF₃ and LiF deposit on the SEI film surface, leading to increased polarization, increased battery internal resistance, and battery interface abnormalities. HF has a corrosive effect on positive electrode materials and current collectors, affecting battery reliability. Therefore, humidity inside cells needs to be controlled during the formation process.

In current formation processes, since considering formation exhaust is required while humidity inside cells is controlled, the overall environment of the formation room needs to be controlled in a dry state (generally relative humidity less than or equal to 2% is controlled). This formation method has strict requirements on environmental conditions and high energy consumption. To improve the problems of high environmental humidity requirements and high energy consumption in current formation processes, a formation method combining open exhaust and closed formation is proposed, that is, opening liquid injection ports for exhaust during the gas production stage of battery cell formation, and closing liquid injection ports for closed formation during the non-gas production stage of battery cell formation. This method of combining open exhaust and closed formation can discharge, in a timely manner, gases generated during the formation process inside batteries. During the exhaust process, due to relatively high internal pressure of batteries, external moisture is difficult to enter, which can reduce reactions between moisture and electrolyte. Closing during the non-gas production stage of formation can also achieve the effect of sealing the internal environment of batteries to prevent moisture from entering.

Although the formation method combining open formation and closed formation can reduce requirements for formation environment to a certain extent, the timing selections of opening and closing have not been deeply explored. The timing selection of opening or closing liquid injection ports has a significant impact on formation effects. If liquid injection ports are opened too early, no gas is discharged from liquid injection ports inside batteries, and external gas enters the battery interior and reacts with the electrolyte. If liquid injection ports are opened too late, excessive gas accumulation inside batteries causes battery swelling. Similarly, if battery liquid injection ports are closed too early, gases inside batteries cannot be completely discharged, resulting in gas accumulation. If liquid injection ports are closed too late, moisture enters the battery interior. In addition, in related technologies, whether gas is produced during the formation process is usually determined by gas production amount. After a detection device such as a gas flow meter detects that gas production starts during the battery formation, liquid injection ports are opened for open formation. After the detection device detects that gas production stops, liquid injection ports are closed for closed formation. This detection method requires an additional detection device and is not suitable for large-scale application promotion.

In view of the problems existing in related technologies, embodiments of this application provide a battery cell formation method with opening first and then closing. With this method combining formation characteristics of battery cells, time nodes for opening and closing liquid injection ports are determined based on the charging SOC during the battery formation process, thereby opening and closing battery liquid injection ports in a timely manner.

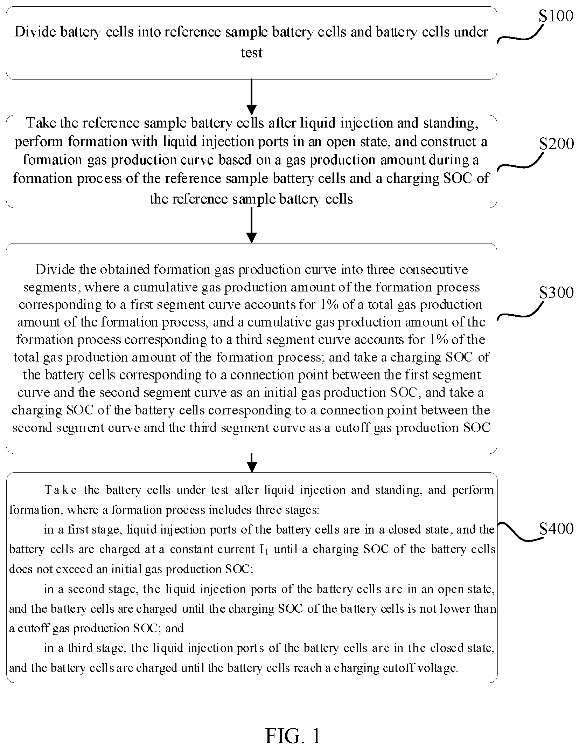

As shown in FIG. 1, embodiments of this application provide a battery cell formation method, which includes the following steps:
S100. Divide battery cells into reference sample battery cells and battery cells under test.

During the formation process of the battery cells, battery cells of the same specification have the same formation characteristics. Battery cells of the same specification refer to battery cells having the same housing dimensions, the same electrode assembly, the same electrolyte, the same liquid injection amount, and the like. The same formation characteristics refer to having the same gas production amount and charging SOC at the same formation time during the formation process of the battery cells. Therefore, by dividing battery cells into reference sample battery cells and battery cells under test, and performing formation tests on reference sample battery cells, formation characteristics of battery cells under test can be obtained.

S200. Take the reference sample battery cells after liquid injection and standing, perform formation with liquid injection ports in an open state, and construct a formation gas production curve based on a gas production amount during a formation process of the reference sample battery cells and a charging SOC of the reference sample battery cells.

In embodiments of this application, charging SOC refers to State of Charge (State of Charge), which is the ratio of the current remaining charge amount of a battery to the rated charge amount. SOC can reflect the charging state of battery cells during the formation process.

The gas production amount of battery cells during the formation process changes regularly with formation time, and charging SOC during formation also changes with formation time. By detecting and recording the gas production amount and charging SOC at different times during the formation process of reference sample battery cells, a formation gas production curve of the gas production amount changing with the charging SOC can be constructed. According to the formation gas production curve, gas production amounts of reference sample battery cells under different charging SOC can be intuitively obtained, and thus gas production amounts of battery cells under test under different charging SOC can be obtained.

In embodiments of this application, the formation process of reference sample battery cells is the same as that of battery cells under test.

In embodiments of this application, the formation gas production curve may be a curve with the charging SOC as the horizontal axis and the gas production amount as the vertical axis, or a curve with the gas production amount as the horizontal axis and the charging SOC as the vertical axis. Abnormal points can be eliminated during the process of constructing the formation gas production curve. Gas production amount and charging SOC corresponding to multiple times can be collected through a detection apparatus.

In some embodiments, gas production amount during the formation process of reference sample battery cells can be detected by gas detection devices such as gas flow meters, barometers, and pressure sensors.

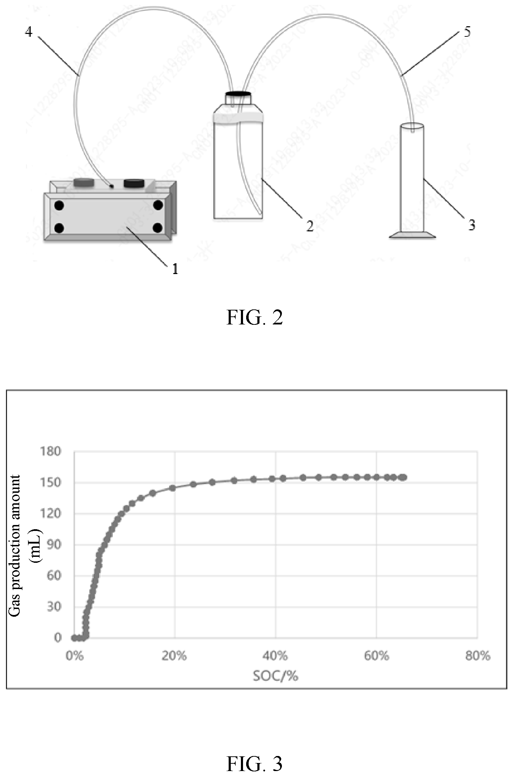

FIG. 2 shows an apparatus for detecting gas production amounts at multiple formation times using a drainage method according to an embodiment of this application. As shown in FIG. 2, the apparatus includes a reference sample battery cell, a water storage barrel, a measuring cylinder, an exhaust pipe, and a drain pipe. The battery sample is placed in a formation position, the liquid injection port is connected to the exhaust pipe, and the other end of the exhaust pipe is connected to the upper end of a water storage bottle containing water and not inserted into the water. The water storage bottle is filled with water to 90% of its volume. A drain pipe is connected from the water storage bottle, one end of the drain pipe is inserted into the bottom of the water, and the other end is connected to the measuring cylinder. The connections between the exhaust pipe and the liquid injection port, between the exhaust pipe and the water storage bottle, and between the drain pipe and the water storage bottle are all kept sealed to avoid air leakage. Through the above apparatus, detection of gas production amount during the formation process can be converted into detection of drainage volume. The drainage volume collected in the measuring cylinder can be equivalent to the gas production amount corresponding to the cell formation process.

At the beginning of formation, gases generated inside the cells are discharged into the water storage bottle through the exhaust pipe. The air pressure in the water storage bottle increases to discharge water in the water storage bottle through the drain pipe into the measuring cylinder. The volume of discharged water can be recorded through the measuring cylinder. The time when formation begins is recorded as the initial formation time. The times when the volume of water in the measuring cylinder increases by every preset volume are recorded as multiple times, and a charging SOC corresponding to each time is recorded. A drainage volume-charging SOC curve is made to obtain the formation gas production curve.

In the above embodiments, the preset volume may include 1mL, 2mL, 3mL, 5mL, 8mL, or 10mL. Preferably, the preset volume may be 2mL, 3mL, or 5mL. By selecting the above preset volumes, a relatively accurate change trend can be obtained when the formation gas production curve is constructed, resulting in a formation gas production curve that more closely matches the actual gas production state.

In the above embodiments, the exhaust volume can also be detected by recording the weight of discharged water. The weight of discharged water at multiple times is continuously recorded through devices such as balances and electronic scales. A drainage weight-charging SOC curve is made based on drainage weight and charging SOC at corresponding times, and the formation gas production curve can also be obtained.

S300. Divide the obtained formation gas production curve into three consecutive segments, where a cumulative gas production amount of the formation process corresponding to a first segment curve accounts for 1% of a total gas production amount of the formation process, and a cumulative gas production amount of the formation process corresponding to a third segment curve accounts for 1% of the total gas production amount of the formation process; and take a charging SOC of the battery cells corresponding to a connection point between the first segment curve and the second segment curve as an initial gas production SOC, and take a charging SOC of the battery cells corresponding to a connection point between the second segment curve and the third segment curve as a cutoff gas production SOC.

FIG. 3 is a formation gas production curve in an embodiment of this application. In the initial stage of formation, the gas production amount inside the battery sample is relatively small, and the detection apparatus can hardly detect gas in this stage. In the formation gas production curve with the formation SOC as the horizontal axis and the gas production amount as the vertical axis, the slope of the formation gas production curve approaches 0. As the formation time increases, the gas production amount continues to increase. In this process, the detection apparatus can detect that gas is generated inside the cell, and the gas production amount continues to increase with the increase of formation time. In this stage, in the formation gas production curve with the formation SOC as the horizontal axis and the gas production amount as the vertical axis, the curve has a larger slope. As formation time continues to increase, the gas production amount that the detection apparatus can detect gradually decreases. In this stage, in the formation gas production curve with the formation SOC as the horizontal axis and the gas production amount as the vertical axis, the slope of the formation curve gradually decreases. As formation time further increases, gas production amount continues to decrease until no more gas is produced. The detection apparatus can hardly detect gas generation. In this stage, in the formation gas production curve with the formation SOC as the horizontal axis and the gas production amount as the vertical axis, the slope of the formation gas production curve approaches 0.

The formation gas production curve is divided into three consecutive segments. The first segment curve corresponds to the initial stage of the formation process. In this stage, the cumulative gas production amount during the formation process accounts for 1% of the total gas production amount of the formation process. It can be considered that almost no gas is produced in this stage, and this stage is classified as a non-gas production stage. The second segment curve corresponds to the intermediate stage of formation. In this stage, a large amount of gas is produced during the formation process. The cumulative gas production amount accounts for 98% of the total gas production amount of the formation process. Almost all gases are produced in this stage during the formation process, and this stage is classified as a gas production stage. The third segment curve corresponds to the later stage of formation. In this process, the cumulative gas production amount accounts for 1% of the total gas production amount of the formation process. It can be considered that almost no gas is produced during the formation process in this stage, and this stage is classified as a non-gas production stage.

In the above embodiments, by dividing the formation gas production curve of reference sample battery cells according to gas production amount, the initial gas production SOC and the cutoff gas production SOC are obtained. The initial gas production SOC and the cutoff gas production SOC are used as the basis for determining whether gas is produced during the formation process of battery cells under test. Specifically, when the battery cells under test are formed with the liquid injection ports in a closed state until the charging SOC reaches the initial gas production SOC, liquid injection ports are opened for open formation. Formation continues until the charging SOC of battery cells under test reaches the cutoff gas production SOC, and then liquid injection ports are closed for closed formation. Thus, by determining time nodes for opening and closing the liquid injection ports through the charging SOC during the battery cell formation process, no additional detection apparatus is needed for gas production amount detection, which can greatly simplify the formation process.

S400. Take the battery cells under test after liquid injection and standing, and perform formation, where a formation process includes three stages:
In a first stage, liquid injection ports of the battery cells are in a closed state, and the battery cells are charged at a constant current I₁ until a charging SOC of the battery cells does not exceed an initial gas production SOC.

In some embodiments, the current I₁ is 0.1C-0.2C. The charging current within this range can initially activate active materials, which is beneficial for forming a stable SEI film. Exemplarily, the current I₁ may be 0.10C, 0.11C, 0.12C, 0.13C, 0.14C, 0.15C, 0.16C, 0.17C, 0.18C, 0.19C, or 0.20C.

In the first stage, closed formation of battery cells is performed, which can reduce entry of external environmental moisture into the interior of battery cells. The charging SOC corresponding to the cutoff time of the first stage formation does not exceed the initial gas production SOC. Preferably, the charging SOC corresponding to the cutoff time of the first stage is the initial gas production SOC. After the charging SOC corresponding to the cutoff time of the first stage formation is reached, the liquid injection ports are opened for first stage formation.

In some embodiments, the charging SOC corresponding to the cutoff time of the first stage formation does not exceed the initial gas production SOC and is not lower than a lower limit SOC, where lower limit SOC = initial gas production SOC + 1%SOC.

When the charging SOC corresponding to the cutoff time of the first stage formation is lower than the lower limit SOC, the liquid injection port opening time is earlier, the amount of gas discharged inside battery cells is less, internal pressure is smaller, and there is a risk of partial moisture entering the interior of battery cells.

In a second stage, the liquid injection ports of the battery cells are in an open state, and the battery cells are charged until the charging SOC of the battery cells is not lower than a cutoff gas production SOC.

In the second stage, open formation of battery cells is performed. Gases generated during the formation process are discharged through the liquid injection ports. During the exhaust process, the internal air pressure of battery cells is higher than the external, which can reduce moisture entry. The charging SOC corresponding to the cutoff time of the second stage formation is not lower than the cutoff gas production SOC. Preferably, the charging SOC corresponding to the cutoff time of the second stage formation is the cutoff gas production SOC. After the charging SOC corresponding to the cutoff time of the second stage formation is reached, liquid injection ports are closed for the third stage formation.

In some embodiments, the charging SOC corresponding to the cutoff time of the second stage formation is not lower than the cutoff gas production SOC and does not exceed an upper limit SOC, where upper limit SOC = cutoff gas production SOC + 5%SOC.

When the charging SOC corresponding to the cutoff time of the second stage formation exceeds the lower limit SOC, the liquid injection port opening time is later, the amount of gas discharged inside battery cells is less, internal pressure is smaller, and there is a risk of partial moisture entering the interior of battery cells.

In a third stage, the liquid injection ports of the battery cells are in the closed state, and the battery cells are charged until the battery cells reach a charging cutoff voltage.

In the third stage, closed formation of battery cells is performed. Almost no gas is produced during this stage of formation process. The liquid injection ports are closed to reduce entry of external moisture.

In some embodiments, the charging cutoff voltage may be 3.7-4.5 V. Exemplarily, the charging cutoff voltage may be 3.7 V, 3.8 V, 3.9 V, 4.0 V, 4.1 V, 4.2 V, 4.3 V, 4.4 V, or 4.5 V.

In embodiments of this application, by performing formation on the reference sample battery cells using the same formation process as the battery cells under test, a formation gas production curve of the battery cells is obtained. According to the formation gas production curve, a charging SOC corresponding to a start time of gas production and a stop time of gas production during the formation process of the battery cells under test can be intuitively obtained. The two charging SOC values are respectively used as judgment basis for opening the liquid injection ports and closing the liquid injection ports during the formation process. When the charging SOC reaches the initial gas production SOC, the liquid injection port is opened for open formation. When the charging SOC reaches the cutoff gas production SOC, the liquid injection port is closed for closed formation. Thus, opening/closing operations of the liquid injection ports are completed in a timely and accurate manner without relying on external gas production amount detection apparatus, simplifying the formation process.

In embodiments of this application, opening and closing operations of liquid injection ports can be performed through liquid injection port opening and closing components. The opening and closing components may include switch valves, cell seals, or the like. Opening and closing operations of liquid injection ports do not affect the internal formation process of battery cells.

In some embodiments, the second stage includes constant-current charging and constant-voltage charging; and the third stage includes constant-voltage charging.

Specifically, the second stage includes: the liquid injection ports of the battery cells are in the open state, and the battery cells are charged at a constant current I₂ to a first state, and charged at a constant voltage U₁ until the charging SOC of the battery cells is not lower than the cutoff gas production SOC.

The third stage includes: the liquid injection ports of the battery cells are in the closed state, and the battery cells are charged at the constant voltage U₁ to the charging cutoff voltage.

In some embodiments, the current I₂ is 0.3C-0.5C. The formation current within this range can fully activate active materials, which is beneficial for forming a stable SEI film. Exemplarily, the current I₂ may be 0.30C, 0.31C, 0.32C, 0.33C, 0.34C, 0.35C, 0.36C, 0.37C, 0.38C, 0.39C, 0.40C, 0.41C, 0.42C, 0.43C, 0.44C, 0.45C, 0.46C, 0.47C, 0.48C, 0.49C, or 0.50C.

In some embodiments, the voltage U₁ is 2.5V-3.7V. Exemplarily, the voltage U₁ may be 2.5V, 2.6V, 2.7V, 2.8V, 2.9V, 3.0V, 3.1V, 3.2V, 3.3V, 3.4V, or 3.5V.

In some embodiments, the first state is that the charging SOC of the battery cells reaches 30%SOC-45%SOC.

In the above embodiments, the cutoff SOC of the constant-current charging of the battery cells at the current I₂ is lower than the cutoff gas production SOC.

In some embodiments, the second stage includes constant-current charging; and the third stage includes constant-current charging and constant-voltage charging.

Specifically, the second stage includes: the liquid injection ports of the battery cells are in the open state, and the battery cells are charged at a constant current I₃ until the charging SOC of the battery cells is not lower than the cutoff gas production SOC.

The third stage includes: the liquid injection ports of the battery cells are in the closed state, and the battery cells are charged at a constant current I3 to a second state, and then charged at a constant voltage U₂ to the charging cutoff voltage.

In some embodiments, the current I₃ is 0.3C-0.5C. The formation current within this range can fully activate active materials, which is beneficial for forming a stable SEI film. Exemplarily, the current I₃ may be 0.30C, 0.31C, 0.32C, 0.33C, 0.34C, 0.35C, 0.36C, 0.37C, 0.38C, 0.39C, 0.40C, 0.41C, 0.42C, 0.43C, 0.44C, 0.45C, 0.46C, 0.47C, 0.48C, 0.49C, or 0.50C.

In some embodiments, the voltage U₂ is 2.5V-3.7V. Exemplarily, the voltage U₂ may be 2.5V, 2.6V, 2.7V, 2.8V, 2.9V, 3.0V, 3.1V, 3.2V, 3.3V, 3.4V, or 3.5V.

In some embodiments, the second state is that the charging SOC of the battery cells reaches 30%SOC-45%SOC.

In the above embodiments, the cutoff SOC of the constant-current charging of the battery cells at the current I₃ is higher than the cutoff gas production SOC.

In some embodiments, the cutoff SOC of the constant-current charging of the battery cells may be equal to the cutoff gas production SOC. In these embodiments, the second stage includes a constant-current charging stage, the third stage includes a constant-voltage charging stage, the constant-current charging current may be the same as I₂ or I₃, and the constant-voltage charging voltage may be the same as U₁ or U₂, which are not listed separately here.

In some embodiments, the first stage further includes a standing step.

Specifically, the first stage includes: the battery cells are charged at the constant current I₁ until the charging SOC of the battery cells does not exceed the initial gas production SOC, and are left standing for 10s-30s.

After the constant-current charging in the first stage ends, standing treatment is performed, which can stabilize active materials inside battery cells, which is beneficial for forming a stable SEI film. Exemplarily, the standing time may be 10s, 11s, 12s, 13s, 14s, 15s, 16s, 17s, 18s, 19s, 20s, 21s, 22s, 23s, 24s, 25s, 26s, 27s, 28s, 29s, or 30s.

In some embodiments, formation temperature in the formation process is 40°C-55°C.

Controlling the formation temperature within the above range can make the electrolyte inside battery cells have appropriate viscosity and ion diffusion rate during the formation process, which is beneficial for reducing polarization and improving formation effect. Exemplarily, formation temperature may be 40°C, 41°C, 42°C, 43°C, 44°C, 45°C, 46°C, 47°C, 48°C, 49°C, 50°C, 51°C, 52°C, 53°C, 54°C, or 55°C.

In some embodiments, formation pressure of the formation process is -65KPa--90KPa.

The formation pressure is controlled within the above range. By applying a certain negative pressure inside batteries, the electrolyte is in full contact with active substances, which is beneficial for improving formation efficiency. Exemplarily, formation pressure may be -65KPa, -70KPa, -75KPa, -80KPa, -85KPa, or -90KPa.

### Examples

Hereinafter, examples of this application are described. The examples described below are exemplary and are only used to explain this application, and should not be construed as limiting this application. In the examples, if specific techniques or conditions are not indicated, techniques or conditions described in literature in the art or product instructions are followed. Reagents or instruments for which manufacturers are not indicated are all conventional products that can be obtained commercially.

### Example 1

Pouch lithium-ion batteries with a capacity of 150Ah were used as reference sample battery cells and battery cells under test. An anode active substance was lithium iron phosphate, a cathode active substance was hard carbon, and the electrolyte was 1mo1/L LiPF₆/EC+DMC (volume ratio 1:1). The following method was used for formation:
S10. Reference sample battery cells after liquid injection and standing were taken, and formation was performed with liquid injection ports in an open state. Charging was performed first at a 0.1C constant current to 2%SOC, charging was performed at a 0.3C constant current to 30%SOC, and charging was performed at a constant voltage of 3.2V to a charging cutoff voltage of 4.0V, where formation temperature was 45°C, and formation pressure was -70Kpa.

During the formation process, a gas flow meter was connected to the liquid injection port to detect a gas production amount in real time, and the interior of the reference sample battery cells was isolated from the outside through the gas flow meter to prevent moisture from entering the interior of the reference sample battery cells. A formation gas production curve was constructed based on the gas production amount during the formation process of the reference sample battery cells and a charging SOC of the reference sample battery cells, with the curve having the charging SOC as the horizontal axis and the gas production amount as the vertical axis.

S20. The obtained formation gas production curve was divided into three consecutive segments, where a cumulative gas production amount of the formation process corresponding to a first segment curve accounted for 1% of a total gas production amount of the formation process, and a cumulative gas production amount of the formation process corresponding to a third segment curve accounted for 1% of the total gas production amount of the formation process. A charging SOC of the battery cells corresponding to a connection point between the first segment curve and the second segment curve was taken as an initial gas production SOC, and a charging SOC of the battery cells corresponding to a connection point between the second segment curve and the third segment curve was taken as a cutoff gas production SOC, where the initial gas production SOC was 3%SOC, and the cutoff gas production SOC was 20%SOC.

S30. Battery cells under test after liquid injection and standing were taken, and formation was performed, where formation included the following three consecutive stages:
First stage: The liquid injection ports of the battery cells remained closed, charging was performed at a 0.1C constant current to 2%SOC, and the liquid injection ports were opened.
Second stage: The liquid injection ports of the battery cells remained open, charging was performed at a 0.3C constant current to 22%SOC, and the liquid injection ports were closed.
Third stage: The liquid injection ports of the battery cells remained closed, and the batteries were charged at a 0.3C constant current to 30%SOC, and then charged at a constant voltage of 3.2V to a charging cutoff voltage of 4.0V.

### Examples 2-6

The method for constructing the formation gas production curve and the composition of battery cells were the same as in Example 1. Specific differences are shown in Table 1.

### Example 7

The models of reference sample battery cells and battery cells under test were the same as in Example 1. The specific formation method was as follows:
S10. Reference sample battery cells after liquid injection and standing were taken, and formation was performed with liquid injection ports in an open state. The batteries were charged first at a 0.1C constant current to 2%SOC, left standing for 10s, charged at a 0.3C constant current to 30%SOC, and charged at a constant voltage of 3.2V to a charging cutoff voltage of 4.0V, where formation temperature was 50°C, and formation pressure was -70Kpa.

During the formation process, a gas flow meter was connected to the liquid injection port to detect a gas production amount in real time, and the interior of the reference sample battery cells was isolated from the outside through the gas flow meter to prevent moisture from entering the interior of reference sample battery cells. A formation gas production curve was constructed based on the gas production amount during the formation process of the reference sample battery cells and a charging SOC of the reference sample battery cells, with the curve having the charging SOC as the horizontal axis and the gas production amount as the vertical axis.

S20. The obtained formation gas production curve was divided into three consecutive segments, where a cumulative gas production amount of the formation process corresponding to a first segment curve accounted for 1% of a total gas production amount of the formation process, and a cumulative gas production amount of the formation process corresponding to a third segment curve accounted for 1% of the total gas production amount of the formation process. A charging SOC of the battery cells corresponding to a connection point between the first segment curve and the second segment curve was taken as an initial gas production SOC, and a charging SOC of the battery cells corresponding to a connection point between the second segment curve and the third segment curve was taken as a cutoff gas production SOC, where the initial gas production SOC was 3%SOC, and the cutoff gas production SOC was 20%SOC.

S30. Battery cells under test after liquid injection and standing were taken, and formation was performed, where formation included the following three consecutive stages:
First stage: The liquid injection ports of the battery cells remained closed, the batteries were charged at a 0.1C constant current to 2%SOC and left standing for 10s, and the liquid injection ports were opened.
Second stage: The liquid injection ports of the battery cells remained open, charging was performed at a 0.3C constant current to 21%SOC, and the liquid injection ports were closed.
Third stage: The liquid injection ports of the battery cells remained closed, and the batteries were charged at a 0.3C constant current to 30%SOC, and then charged at a constant voltage of 3.2V to a charging cutoff voltage of 4.0V.

### Comparative Examples 1 and 2

The method for constructing the formation gas production curve and the composition of battery cells were the same as in Example 1. Specific differences are shown in Table 1.

**Table 1**

| | Battery capacity | Initial gas production SOC | Cutoff gas production SOC | First stage | | | Second stage | | | | Third stage | | | |
|---|---|---|---|---|---|---|---|---|---|---|---|---|---|---|
| | | | | Constant-current charging | | Standing | Constant-current charging | | Constant-voltage charging | | Constant-current charging | | Constant-voltage charging | |
| | | | | Charging current | Cutoff SOC | | Charging current | Cutoff SOC | Charging voltage | Cutoff SOC | Charging current | Cutoff SOC | Charging voltage | Cutoff voltage |
| Example 1 | 150Ah | 3%SOC | 20%SOC | 0.1C | 2%SO C | 10s | 0.3C | 21%SO C | / | / | 0.3C | 30%SO C | 3.2V | 4.0V |
| Example 2 | 120Ah | 3%SOC | 20%SOC | 0.1C | 3%SO C | 10s | 0.3C | 20%SO C | / | / | 0.3C | 30%SO C | 3.2V | 4.0V |
| Example 3 | 125Ah | 3%SOC | 20%SOC | 0.1C | 2%SO C | 10s | 0.3C | 20%SO C | / | / | 0.3C | 30%SO C | 3.2V | 4.0V |
| Example 4 | 228Ah | 3%SOC | 20%SOC | 0.1C | 3%SO C | 10s | 0.3C | 26%SO C | / | / | 0.3C | 30%SO C | 3.2V | 4.0V |
| Example 5 | 302Ah | 3%SOC | 22%SOC | 0.1C | 2%SO C | 10s | 0.3C | 15%SO C | 3.2V | 26%SO C | / | / | 3.2V | 4.0V |
| Example 6 | 295Ah | 3%SOC | 25%SOC | 0.1C | 3%SO C | 10s | 0.3C | 15%SO C | 3.2V | 25%SO C | / | / | 3.2V | 4.0V |
| Example 7 | 95Ah | 3%SOC | 20%SOC | 0.1C | 2%SO C | 10s | 0.3C | 21%SO C | / | / | 0.3C | 30%SO C | 3.2V | 4.0V |
| Comparative Example 1 | 150Ah | 3%SOC | 20%SOC | 0.1C | 5%SO C | 10s | 0.3C | 21%SO C | / | / | 0.3C | 30%SO C | 3.2V | 4.0V |
| Comparative Example 2 | 302Ah | 3%SOC | 22%SOC | 0.1C | 2%SO C | 10s | 0.3C | 15%SO C | / | / | 0.3C | 30%SO C | 3.2V | 4.0V |

### Comparative Example 3

Full open formation was adopted. The specific method was as follows:
Battery cells under test after liquid injection and standing were taken, and formation was performed. Liquid injection ports of the battery cells remained in an open state. The batteries underwent: charging at a 0.1C constant current to 2%SOC, charging at a 0.3C constant current to 26%SOC, continuous charging at the 0.3C constant current to 30%SOC, and charging at a constant voltage of 3.2V to a charging cutoff voltage of 4.0V, where formation temperature was 50°C, formation pressure was -70KPa.

### Test section

Electrode interfaces of the battery cells after formation in each example and comparative example were detected. The detection method was as follows:
(1) Fresh electrode interface: After formation, batteries were replenished with liquid and fully charged, then batteries were disassembled, positive electrode sheets were unfolded to obtain fresh positive electrode interfaces, and it was observed whether there were abnormalities such as black spots, lithium precipitation, and poor exhaust on positive electrode interfaces.
(2) Electrode interface after 50 cycles: After formation, batteries underwent liquid replenishment and capacity testing, then underwent 50 cycles of charge and discharge, and then were fully charged. Then batteries were disassembled, positive electrode sheets were unfolded to obtain positive electrode interfaces after 50 cycles of charge and discharge, and it was observed whether there were abnormalities such as black spots, lithium precipitation, and poor exhaust on positive electrode interfaces.

Detection results are shown in Table 2.

**Table 2**

| | Fresh electrode interface | Electrode interface after 50 cycles |
|---|---|---|
| Example 1 | No black spots, no lithium precipitation, and normal exhaust | No black spots, no lithium precipitation, and normal exhaust |
| Example 2 | No black spots, no lithium precipitation, and normal exhaust | No black spots, no lithium precipitation, and normal exhaust |
| Example 3 | No black spots, no lithium precipitation, and normal exhaust | No black spots, no lithium precipitation, and normal exhaust |
| Example 4 | No black spots, no lithium precipitation, and normal exhaust | No black spots, small amount of lithium precipitation, and normal exhaust |
| Example 5 | No black spots, no lithium precipitation, and normal exhaust | No black spots, no lithium precipitation, and normal exhaust |
| Example 6 | No black spots, no lithium precipitation, and normal exhaust | No black spots, no lithium precipitation, and normal exhaust |
| Example 7 | No black spots, no lithium precipitation, and normal exhaust | No black spots, no lithium precipitation, and normal exhaust |
| Comparative Example 1 | No black spots, no lithium precipitation, and poor exhaust | No black spots, lithium precipitation, and poor exhaust |
| Comparative Example 2 | Slight black spots, no lithium precipitation, and poor exhaust | Slight black spots, lithium precipitation, and poor exhaust |
| Comparative Example 3 | Severe black spots, no lithium precipitation, and poor exhaust | Severe black spots, lithium precipitation, and poor exhaust |

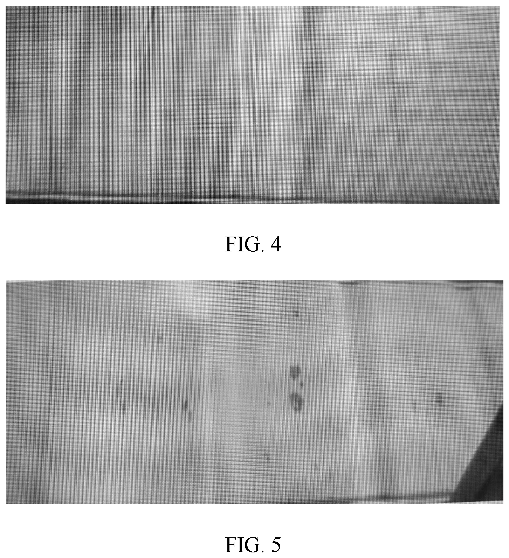

FIG. 4 and FIG. 5 respectively are photographs of fresh positive electrode interfaces obtained by disassembling battery cells after formation in Example 1 and Comparative Example 3. It can be seen that there are severe black spots on the positive electrode interface in Comparative Example 3. The presence of these black spots leads to lithium precipitation during the cycling process and damages the positive electrode interface of batteries. The electrode interface in Example 1 is good, with no black spots appearing. It can be known that using a formation process with opening first and then closing can effectively reduce entry of external moisture into the interior of battery cells, reduce reactions between moisture and the interior of battery cells, and reduce damage to electrode interfaces.

Although this application has been described with reference to preferred Examples, various improvements can be made and components therein can be replaced with equivalents without departing from the scope of this application. In particular, as long as there is no structural conflict, various technical features mentioned in each Example can be combined in any manner. This application is not limited to the specific Examples disclosed herein, but includes all technical solutions falling within the scope of the claims.

## Claims

1. A battery cell formation method, comprising the following steps:
dividing battery cells into reference sample battery cells and battery cells under test;
taking the reference sample battery cells after liquid injection and standing, performing formation with liquid injection ports in an open state, and constructing a formation gas production curve based on a gas production amount during a formation process of the reference sample battery cells and a charging SOC of the reference sample battery cells;
dividing the obtained formation gas production curve into three consecutive segments, wherein a cumulative gas production amount of the formation process corresponding to a first segment curve accounts for 1% of a total gas production amount of the formation process, and a cumulative gas production amount of the formation process corresponding to a third segment curve accounts for 1% of the total gas production amount of the formation process; and taking a charging SOC of the battery cells corresponding to a connection point between the first segment curve and the second segment curve as an initial gas production SOC, and taking a charging SOC of the battery cells corresponding to a connection point between the second segment curve and the third segment curve as a cutoff gas production SOC; and
taking the battery cells under test after liquid injection and standing, and performing formation, wherein a formation process comprises three stages:
in a first stage, liquid injection ports of the battery cells are in a closed state, and the battery cells are charged at a constant current I₁ until a charging SOC of the battery cells does not exceed an initial gas production SOC;
in a second stage, the liquid injection ports of the battery cells are in an open state, and the battery cells are charged until the charging SOC of the battery cells is not lower than a cutoff gas production SOC; and
in a third stage, the liquid injection ports of the battery cells are in the closed state, and the battery cells are charged until the battery cells reach a charging cutoff voltage.

2. The battery cell formation method according to claim 1, wherein the second stage comprises: the liquid injection ports of the battery cells are in the open state, and the battery cells are charged at a constant current I₂ to a first state, and charged at a constant voltage U₁ until the charging SOC of the battery cells is not lower than the cutoff gas production SOC.

3. The battery cell formation method according to claim 2, wherein the third stage comprises: the liquid injection ports of the battery cells are in the closed state, and the battery cells are charged at the constant voltage U₁ to the charging cutoff voltage.

4. The battery cell formation method according to claim 2 or 3, wherein
the current I₂ is 0.3 C-0.5 C; and/or
the voltage U₁ is 2.5 V-3.7 V; and/or
the first state is that the charging SOC of the battery cells reaches 30% SOC-45% SOC.

5. The battery cell formation method according to claim 1, wherein the second stage comprises: the liquid injection ports of the battery cells are in the open state, and the battery cells are charged at a constant current I₃ until the charging SOC of the battery cells is not lower than the cutoff gas production SOC.

6. The battery cell formation method according to claim 5, wherein the third stage comprises: the liquid injection ports of the battery cells are in the closed state, and the battery cells are charged at a constant current I3 to a second state, and then charged at a constant voltage U₂ to the charging cutoff voltage.

7. The battery cell formation method according to claim 5 or 6, wherein
the current I₃ is 0.3C-0.5C; and/or
the voltage U₂ is 2.5V-3.7V; and/or
the second state is that the charging SOC of the battery cells reaches 30%SOC-45%SOC.

8. The battery cell formation method according to any one of claims 1 to 7, wherein the current I₁ is 0.1C-0.2C; and/or
the charging cutoff voltage is 3.7V-4.5V.

9. The battery cell formation method according to any one of claims 1 to 8, wherein the first stage comprises: the battery cells are charged at the constant current I₁ until the charging SOC of the battery cells does not exceed the initial gas production SOC, and are left standing for 10s-30s.

10. The battery cell formation method according to any one of claims 1 to 9, wherein formation temperature of the formation process is 40°C-55°C; and/or
formation pressure of the formation process is -65KPa--90KPa.
